# EUROPEAN PATENT SPECIFICATION

(11) **EP 1 780 883 B1**
(45) Date of publication and mention of the grant of the patent: **22.04.2015**
(21) Application number: 06122161.0
(22) Date of filing: 12.10.2006
(51) Int. Cl.: H02P 9/10, B60H 1/32

(54) **Regulating unit for controlling the frequency and voltage of an output signal**
Steuervorrichtung zum Steuern von der Frequenz und Spannung eines Ausgangssignal
Unité de régulation pour contrôler la fréquence et la tension d'un signal de sortie

(30) Priority: 12.10.2005 NL 1030177
(43) Date of publication of application: 02.05.2007
(73) Proprietor: Govers, Henricus Johannes Antonius Alphonsus, 4861 PR Chaam (NL)
(72) Inventor: Govers, Henricus Johannes Antonius Alphonsus, 4861 PR, Chaam (NL); Vingerhoets, Adrianus Gerardus Maria, 4861 PR, Chaam (NL); de Graaf, Henricus Alphonsus Franciscus, 4861 PR, Chaam (NL)
(74) Representative: Nederlandsch Octrooibureau

(56) References cited:
- US-A- 4 667 480
- US-A- 4 870 833
- PATENT ABSTRACTS OF JAPAN vol. 015, no. 321 (M-1147), 15 August 1991 (1991-08-15) & JP 03 121918 A (MATSUSHITA ELECTRIC IND CO LTD), 23 May 1991 (1991-05-23)

## Description

### Scope of the invention

The present invention relates to a regulating unit for providing an output signal with a regulated output frequency and output voltage, wherein the regulating unit comprises an input connection for receiving an input signal with an input frequency and input voltage, the input connection being connectable to an electric generator driven by a power drive, and comprises at least one output connection for providing an output signal with an output frequency and output voltage, wherein the at least one output connection is connectable to at least one (electrical) consumer.

### Prior art

The American patent specification US2003/0000236 describes a control system for a refrigeration installation in freight trucks. The supply voltage coming from a generator is conditioned by way of the feedback signals from the refrigeration installation. A separate inverter is provided for each consumer in the refrigeration installation. Such feedback and control for each partial consumer is complex and requires a specially adapted inverter for each consumer.

American patent specification US4,870,833 describes a regulation method for an air-conditioning system for a vehicle, wherein it is attempted to make the capacity of the air-conditioning system independent of the revolutions of the vehicle engine. On the basis of a measured voltage supplied by the generator, it is determined whether the frequency of an inverter of one of the three components of the system (compressor, condenser ventilator and evaporator ventilator) has to be regulated down so that required capacity does not exceed the maximum deliverable capacity.

### Summary of the invention

The present invention tries to create a regulating unit for a generator, which in a simple and efficient manner can be applied when an internal combustion engine is used for producing electrical power for one or more consumers.

According to the present invention a regulating unit of the type set out in the introduction is provided in accordance with claim 1. The regulating unit comprises a connection for receiving an external signal from at least one consumer. The regulating unit is also arranged so that after receiving the external signal the output frequency is regulated back to a lower frequency, for example 0 Hz (and the output voltage to a lower value, for example 0 Vac), and then, after a predetermined period of time the output frequency (and voltage) is allowed to increase linearly again. Such a soft start-up regulation has both a beneficial influence on the service life of the connected consumer and a beneficial effect on the behaviour of the power drive (less problems with a reduction in revolutions or torque loss through the sudden switching on of a consumer). The predetermined period is more than 2 seconds in one embodiment, for example 5 seconds.

The nominal frequency in one embodiment is substantially equal to 50 Hz. The present regulating unit makes it possible to effectively supply one or more consumers with a regulated supply voltage, wherein over a large speed range of the power drive good operation of each of the consumers is possible.

In a further embodiment the regulating unit also comprises a voltage regulator arranged to control the output voltage, wherein the output voltage substantially increases in a linear manner with increasing power drive speed in a range from 0 to a nominal voltage, and above the nominal voltage is substantially held constant. The nominal voltage in one embodiment is substantially equal to 400 Vac. By not only regulating the frequency, but also the voltage of an output signal, even more efficient operation of the consumers is possible. As an alternative other nominal values can be selected, for example, depending on the country of use, 60 Hz and 500 Vac can also be chosen as nominal values.

In a further embodiment the generator and regulating unit are arranged to achieve a minimum frequency (and minimum voltage) with a stationary power drive speed. At this minimum frequency (and voltage) operation of the connected consumers is assured, albeit at a lower level than normal. The regulating unit can, for example, be arranged to already supply an output signal of 30 Hz (and 240 Vac) at a stationary speed of 600 rpm, whereby a connected refrigeration installation can provide 60% of its refrigeration capacity. In practice this means that whenever a vehicle has the engine running, a minimum capacity can always be supplied to the consumers.

In order to assure operation of a consumer for as long as possible, the regulating unit is also arranged to adjust the output frequency (and output voltage) back proportionally in the event of loading of a consumer above a predetermined consumption value. In the event of overloading by the consumers the output signal is thus proportionally restricted until a balanced situation is achieved between generated and used capacity.

In order to achieve the correct output frequency and voltage the regulating unit has one or more inverters. Other converters and regulating switches can also be used.

In a further embodiment the regulating unit is accommodated in a casing provided with passive cooling means, such as cooling fins. This facilitates connection to an existing installation (between the generator and consumers). By making use of passive cooling means the regulating unit is more robust as there are no elements that are sensitive to external influences, such as vibrations. In yet another embodiment components of the regulating unit are therefore cast in the casing. Particularly in the case of mounting on a freight truck, such a shock-resistant regulating unit has advantages.

### Brief description of the drawings

The present invention will now be discussed in more detail with the aid of a number of examples of embodiments and with reference to the attached drawings.
Fig. 1 shows a block diagram of an installation in which the present invention is used,
Fig. 2 shows a graph of the output frequency at the output of the regulating unit as a function of the speed of the power drive, and the corresponding refrigeration capacity of a connected refrigeration installation.
Fig. 3 shows a detailed block diagram of an embodiment of the present invention.
Fig. 4 shows the course of time of a number of characteristic values in the example of embodiment of fig. 3.
Figs. 5a and b respectively show the course of the torque and the course of the consumed current by a consumer as a function of the speed of the motors of the consumers during start-up with a control in accordance with the prior art: and
Figs. 6a and b respectively show the course of the torque and the course of the consumed current by a consumer as a function of the speed of the motors of the consumers during start-up with a control in accordance with the present invention.

### Detailed description of exemplary embodiments

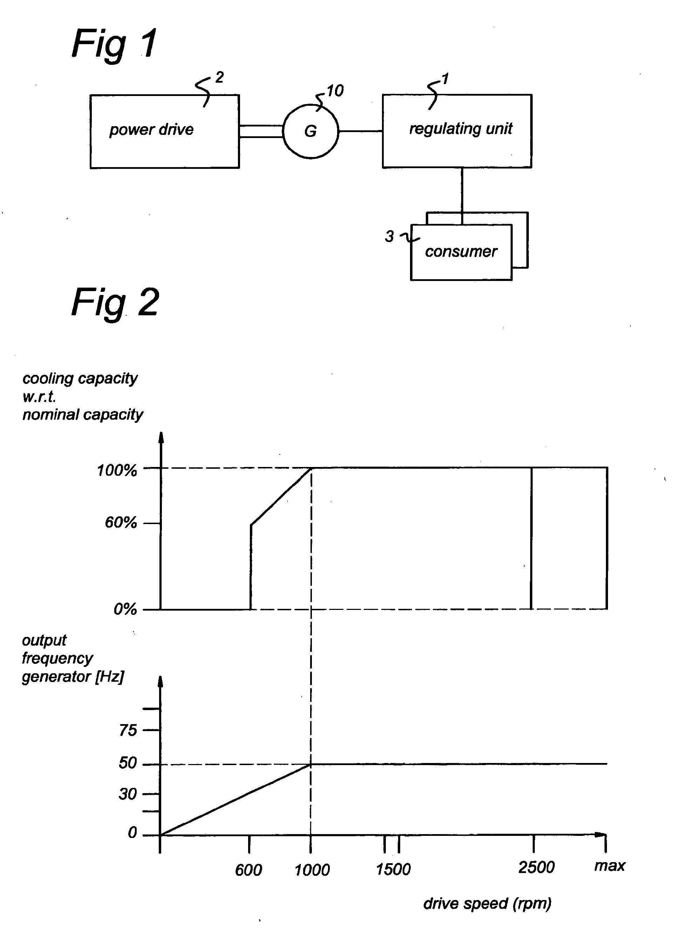

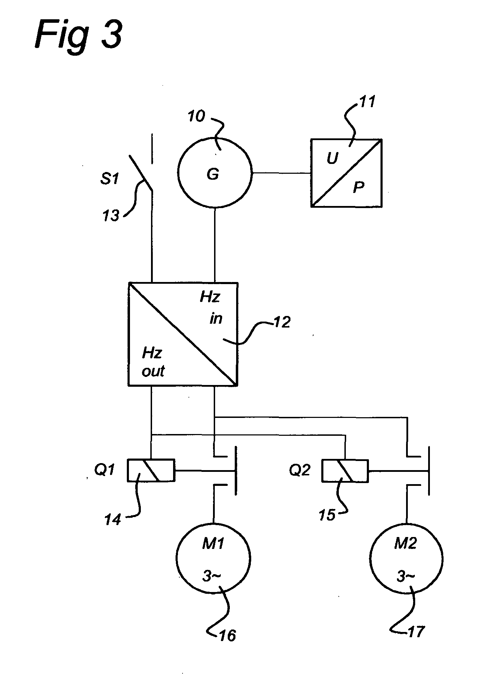

The regulating unit in accordance with the present invention can be used to advantage for electrically supplied apparatus that is used, for example, in vehicles, such as refrigeration installations for freight trucks. In fig. 1 a block diagram of the elements involved is shown. A power drive 2 is coupled to a generator 10 which produces electrical power. The power drive 2 is, for example, an internal combustion engine of a freight truck which directly or via a transmission mechanically drives the generator 10. The electrical power produced by the generator 10 is, via a regulating unit 1, made suitable for one or more (electrical) consumers 3 such as the various motors of a refrigeration installation. The regulating unit 1 comprises, for example, a voltage regulator 11 which is connected to the generator 10 and limits the provided voltage to a nominal value (see also fig. 3 below).

The regulating unit 1 is a modular unit that is arranged to keep the rotating voltage and frequency of the generator 10, which increase linearly with the generator speed, constant as of a certain point. The control unit 1 also provides for a soft start-up of the electrical consumers 3 and automatic load reduction in the event of overloading of the generator 10. An additional advantage is also that by applying a frequency regulator 12 (see description of the form of embodiment of fig. 3a below), the reactive current in the generator winding disappears completely (the power factor is 1 [-]). In this way the generator 10 can be more heavily loaded. In one embodiment both the generator 10 and regulating unit 1 are air-cooled and dimensioned at cooling air temperatures of +40°C. Through the compact design it is very easy to incorporate into an existing installation. The soft start-up regulation only requires a minimum of communication between the consumer 3 and regulating unit 1.

Embodiments of the present invention can be used to advantage in the power drive of an electrical transport refrigeration installation 3 by way of the internal combustion engine of a freight truck. The generator 10 required for this emits an output signal with a certain voltage and frequency which continuously changes with the continuously changing engine speed. However, this only works effectively within a restricted speed range of the internal combustion engine, for example, between 1000 and 2500 revolutions per minute. Through the limited bandwidth of the electrical supply within which the refrigeration installation 3 can operate, this has to be taken into account when designing the transport refrigeration installation 3. On the one hand the refrigeration machine 3 is disconnected therefrom by the electrical control as soon as the voltage and/or frequency it too high or too low. On the other hand the transmission from the freight truck engine 2 to the generator 10 is selected so that the limits are not exceeded. This (dis)connection operation leads in some cases to unacceptable capacity and operating safety reductions. Furthermore, the consumer 3 (refrigeration machine) has to be specially arranged for this purpose (electrical design and application of special components).

In accordance with one embodiment of the present invention a regulating unit 1 is arranged between the generator 10 and electrical consumer 3 discussed above with reference to fig. 1. With the transmission of the minimum input speed (i.e. the stationary speed of the freight truck engine) the generator supplies an output frequency of 30 Hz (and 240 Vac). For many electrical consumers this already implies an output capacity of 60% (=30 Hz/50 Hz or 240V/400V) of the normal capacity. Up to 50 Hz/400 Vac (= nominal) the output voltage and frequency of the regulating unit 1 increase linearly with the input voltage and frequency of the generator. For the output frequency this is shown in the graphs in fig. 2. For the output voltage a similar characteristic applies: at 600 revolutions per minute the output voltage is 240 Vac, at 1000 revolutions per minute and more 400 Vac. As soon as the nominal value is reached the voltage and frequency are kept constant by the regulating unit 1. If the nominal value is not reached the output situation is identical to the input situation again. This accomplishes that the user 3 is regulated in its bandwidth by the regulating unit 1. Fig. 2 also shows the accompanying graph of the percentage refrigeration capacity when a refrigeration installation is connected as consumer 3. The graph clearly shows that over a small speed range at least 60% of the refrigeration capacity is present and over large speed range it is even 100% of the refrigeration capacity.

The regulation carried out by the regulating unit 1 is also expanded with a soft start-up regulation. On the basis of a signal, coming, for example, from the control of consumer 3, the output signal is regulated back to 0 Hz and 0 Vac. After a programmed time delay of, for example, more than two seconds, the output signal is, in a programmed time period, regulated up to the momentary voltage/frequency of the generator 10, or, if this is greater than the nominal value, to 400 Vac/50 Hz. The soft start-up resulting therefrom has a service life-prolonging effect for the consumer 3 as well as a lesser influence on the power drive 2 (for example a reduction in the speed).

Fig. 3 shows, in more detail, a block diagram of an installation in which a regulating unit 1 in accordance with the present invention is used. The regulating unit 1 comprises a voltage regulator 11 (U/P) which is connected to the generator 10 for regulating the voltage delivered by the generator 10. The regulating unit 1 also comprises a frequency regulator 12 that ensures adaptation of the frequency of the input signal (shown as Hz In in fig. 3) to the frequency of the output signal (shown as Hz Out in fig. 3). The consumer 3 in this form of embodiment consists of a first load 16 (three-phase motor M1) and a second load 17 (three-phase motor M2). The power supply can be switched to each of these loads 16, 17 by the regulating unit 1 using switches 14, 15 respectively (in this example magnetic switches Q1 and Q2). The regulating unit 1 is also arranged to receive an external signal S 1 which in this example originates from the consumer 3 (via switch 13).

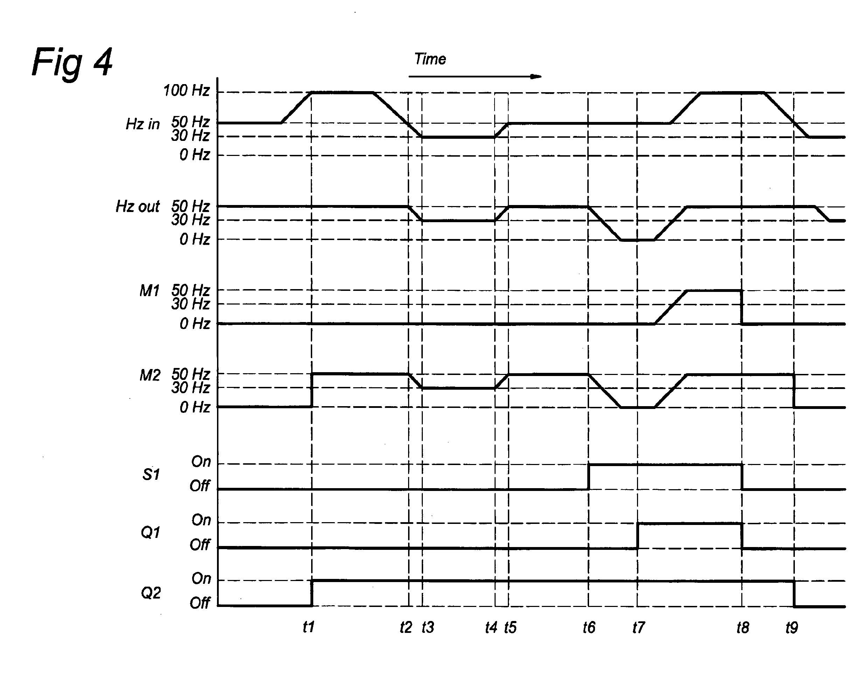

With reference to the graphs in fig. 4 a number of example situations will now be discussed with regard to the operation of a refrigeration installation 3 in a freight truck. In fig. 4 'Hz in' is the frequency supplied by the generator 10 to the frequency regulator. This is directly dependent on the speed of the generator 10. The provided voltage changes linearly in proportion with the frequency until the nominal value of 50 Hz/400 Vac is achieved. As of that moment the voltage regulator 11 limits the voltage to 400 Vac in the event of increasing frequency. If the generator 10 is overloaded the voltage regulator 11 regulates the voltage down proportionally until a new balance is achieved. 'Hz out' is the frequency of the output signal supplied by the frequency regulator 12. If the provided frequency 'Hz' is less than 50 Hz the emitted frequency 'Hz out' is the same as the supplied frequency. In addition, the emitted frequency 'Hz out' (and the output voltage) is kept constant. In the graph it can be seen that at time t1 the smallest consumer 3 (load M3) is switched on and starts to operate at the full nominal frequency of 50 Hz which is available at time t1. Prior to time t1 the input frequency Hz has increased to 100 Hz, but the output frequency Hz out remains at 50 Hz. At time t2 the input frequency has fallen back from 100 Hz to 50 Hz and then falls further to 30 Hz at time t3 (for example though the freight truck engine falling back to stationary speed). This is also seen in the output frequency and the frequency of the M2, which as of time t2 falls back from 50 Hz to 30 Hz at time t3. The reverse takes place between times t4 and t5: the output frequency then increases to the nominal value of 50 Hz.

In order to switch on the heaviest consumer 3 (M1), an external signal (S1) from the consumer 3 must be activated. This takes place at time t6 as shown in the graph. The frequency regulator 12 will then on the basis of the applicable situation first regulate the output signal completely back to 0 Hz. The present smaller consumer 3 (load M2) will in the same way also be regulated back. After a programmable time delay (for example several seconds) the magnetic switch 14 (Q1) of the heavy consumer 3 (M1) is switched on at time t7 and after a programmable time delay (for example two or five seconds) the emitted frequency will increase from 0 Hz to the momentary generator frequency (provided that it is less than or equal to 50 Hz). The steepness with which frequencies can be regulated up or down is programmable. In this way soft start-up can be set. The switch sequences Q1 and Q2 can to a significant degree be determined by the consumer 3. In the case of a refrigeration machine M1 is, for example, the cooling compressor and M2 represents the evaporator ventilators. In the shown example at time t8 first the heavy consumer 3 (cooling compressor M1) is switched off (signals S1 and Q1) and then at time t9 the smaller consumer 3 (evaporator ventilators M2).

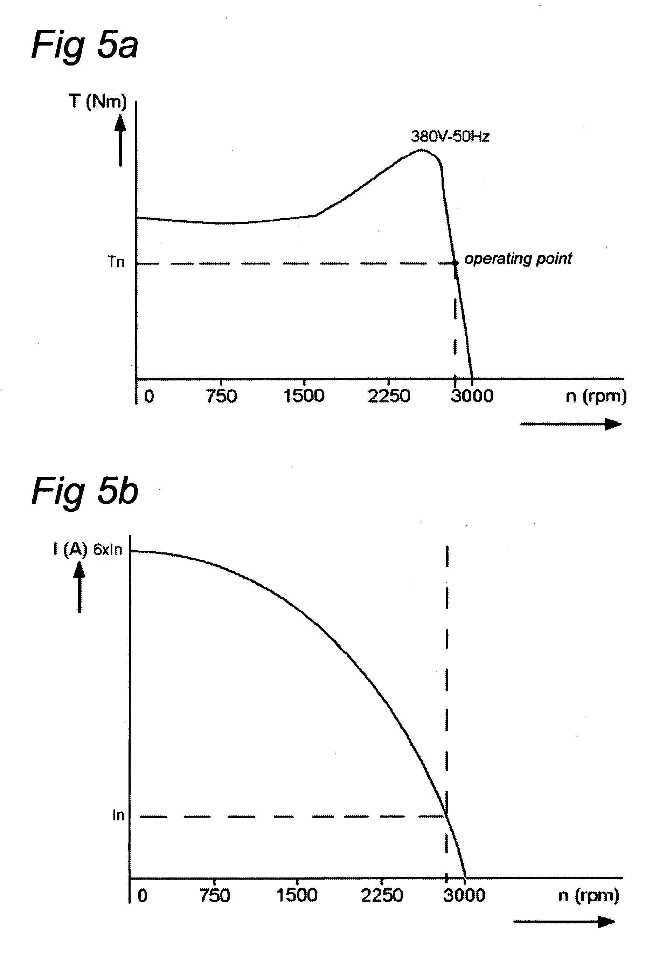

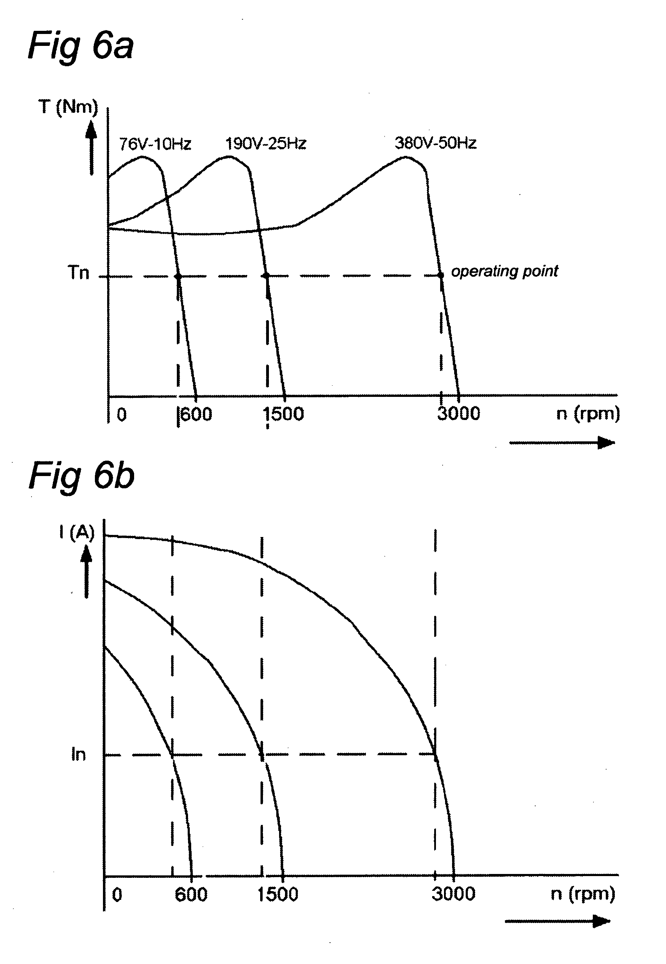

The advantages of the present invention can also be explained with reference to figs. 5 and 6. Figs. 5a and b respectively show the course of the torque T and the course of the current taken up by the consumer 3 (load) shown as a function of the speed of the motors of the consumer 3 during start-up with regulation in accordance with the prior art. Here, the frequency is held at 50 Hz and the supplied voltage at 380 Vac. As result a switch-on current occurs which is six times greater than the current In at the normal operating point (3000 revolutions per minute).

If regulation in accordance with the embodiments of the present invention is used, wherein the frequency increase linearly from 0 to 50 Hz and from 0 to 380 Vac, in the same consumer 3 the switch-on current remains limited to 1.5 In which results in much lower loading of the generator 10. Figs. 6a and b respectively show the torque T and the current I for three operating points: at 600 revolutions per minute the output voltage is regulated to 76 Vac and the output frequency to 10 Hz, at 1500 revolutions per minute to 190 V and 25 Hz respectively, and at 3000 revolutions per minute the output voltage is regulated to 380 Vac and the frequency to 50 Hz. The frequency regulator 12 is thus controlled that at switch-on these work points are shifted, as a result of which the current in this example remains limited to 1.5 In.

The regulating unit 1 is as mentioned above suitable, for example, for use on existing refrigeration installations on a freight truck, by being arranged between the generator 10 and consumers 3. Preferably the elements and components forming the regulating unit 1 are accommodated in a single casing. The casing can be provided with passive cooling elements such as cooling fins in order to keep the temperature of the regulating unit 1 within operational limits. In order to make simple installation (also retrospectively) possible, the regulating unit 1 is, in a further embodiment, provided with suitable plugs for connection with generator 10 and the consumers 3.

In the examples discussed above a nominal frequency of 50 Hz and a nominal voltage of 400 Vac are assumed. It should be clear that the regulating unit 1 can also be set up for other values which may differ by country (for example 60 Hz and 500 Vac).

## Claims

1. Regulating unit (1) for providing an output signal with a regulated output frequency and output voltage, wherein the regulating unit (1) comprises:
an input connection for receiving an input signal with an input frequency and input voltage, the input connection being connectable to an electric generator (10) driven by an engine of a road vehicle (2), the engine being arranged to operate with a variable speedrange in an operational range between zero and a maximum frequency;
at least one output connection for providing an output signal with an output frequency and an output voltage, wherein the at least one output connection is connectable to at least one consumer (3; 16; 17) that can only be driven with a limited bandwidth smaller than the operational bandwidth;
a frequency regulator (12) arranged to control the output frequency, wherein the output frequency substantially increases linearly with increasing speed of the engine in a range from 0 to a nominal frequency, and above the nominal frequency is kept substantially constant; wherein the regulating unit (1) further comprises a connection for receiving an external signal from the at least one consumer (3; 16; 17) and wherein the regulating unit is arranged so that after receiving the external signal the output frequency is regulated back to a lower frequency and then, after a predetermined period of time, the output frequency is allowed to increase linearly again.

2. Regulating unit in accordance with claim 1, wherein the predetermined period of time is more than 2 seconds, for example 5 seconds.

3. Regulating unit in accordance with claim 1 or 2, wherein the nominal frequency is substantially equal to 50 Hz.

4. Regulating unit in accordance with claim 1, 2 or 3, wherein the regulating unit further comprises a voltage regulator (11) that is arranged to control the output voltage, wherein the output voltage substantially increases linearly with increasing speed of the power drive in a range from 0 to a nominal voltage and above the nominal voltage is kept substantially constant.

5. Regulating unit in accordance with claim 4, wherein the nominal voltage is substantially equal to 400 Vac.

6. Regulating unit in accordance with any one of the preceding claims, wherein the generator (10) and regulating unit (12) are arranged to achieve a minimum frequency at a stationary speed of the power drive (2).

7. Regulating unit in accordance with claim 6, wherein the minimum frequency is substantially equal to 30 Hz.

8. Regulating unit in accordance with any one of the preceding claims, wherein the regulating unit (1) is further arranged to proportionally regulate the output frequency back in the event of loading of the consumer (3; 16; 17) above a predetermined consumption value.

9. Regulating unit in accordance with the preceding claims, wherein the regulating unit (1) comprises one or more inverters.

10. Regulating unit in accordance with any one of the preceding claims, wherein the regulating unit (1) is accommodated in a casing provided with passive cooling means.

11. Regulating unit in accordance with any one of the preceding claims, wherein components of the regulating unit (1) are cast in one casing.

## Patentansprüche

1. Regeleinheit (1) zum Bereitstellen eines Ausgangssignals mit einer geregelten Ausgangsfrequenz und Ausgangsspannung, wobei die Regeleinheit (1) umfasst:
einen Eingangsanschluss zum Empfangen eines Eingangssignals mit einer Eingangsfrequenz und Eingangsspannung, wobei der Eingangsanschluss mit einem Stromerzeuger (10), der von einem Motor eines Straßenfahrzeugs (2) angetrieben wird, verbindbar ist, wobei der Motor so ausgestaltet ist, dass er mit einem variablen Drehzahlbereich in einem Arbeitsbereich zwischen Null und eine maximalen Frequenz arbeitet;
mindestens einen Ausgangsanschluss zum Bereitstellen eines Ausgangssignals mit einer Ausgangsfrequenz und einer Ausgangsspannung, wobei der mindestens eine Ausgangsanschluss mit mindestens einem Verbraucher (3; 16; 17) verbindbar ist, der nur mit einer begrenzten Bandbreite kleiner als die Arbeitsbandbreite antreibbar ist;
einen Frequenzregler (12), der zum Steuern der Ausgangsfrequenz ausgestaltet ist, wobei die Ausgangsfrequenz sich im Wesentlichen linear mit der zunehmenden Drehzahl des Motors in einem Bereich von 0 bis zu einer Nennfrequenz erhöht und über der Nennfrequenz im Wesentlichen konstant gehalten wird;
wobei die Regeleinheit (1) ferner einen Anschluss zum Empfangen eines externen Signals von dem mindestens einen Verbraucher (3; 16; 17) umfasst, und wobei die Regeleinheit so ausgestaltet ist, dass nach dem Empfang des externen Signals die Ausgangsfrequenz auf eine niedrigere Frequenz heruntergeregelt wird und die Ausgangsfrequenz sich dann, nach einer vorbestimmten Zeitdauer, wieder linear erhöhen kann.

2. Regeleinheit nach Anspruch 1, wobei die vorbestimmte Zeitdauer mehr als 2 Sekunden, beispielsweise 5 Sekunden ist.

3. Regeleinheit nach Anspruch 1 oder 2, wobei die Nennfrequenz im Wesentlichen gleich 50 Hz beträgt.

4. Regeleinheit nach Anspruch 1, 2 oder 3, wobei die Regeleinheit ferner eine Spannungsregler (11) umfasst, der zum Steuern der Ausgangsspannung ausgestaltet ist, wobei die Ausgangsspannung sich im Wesentlichen linear mit der zunehmenden Drehzahl des Kraftantriebs in einem Bereich von 0 bis zu einer Nennspannung erhöht und über der Nennspannung im Wesentlichen konstant gehalten wird.

5. Regeleinheit nach Anspruch 4, wobei die Nennspannung im Wesentlichen gleich 400 Vac ist.

6. Regeleinheit nach einem der vorstehenden Ansprüche, wobei der Generator (10) und die Regeleinheit (12) ausgestaltet sind, bei gleichbleibender Drehzahl des Kraftantriebs (2) eine minimale Frequenz zu erzielen.

7. Regeleinheit nach Anspruch 6, wobei die minimale Frequenz im Wesentlichen gleich 30 Hz ist.

8. Regeleinheit nach einem der vorstehenden Ansprüche, wobei die Regeleinheit (1) ferner ausgestaltet ist, die Ausgangsfrequenz proportional herunterzuregeln, wenn der Verbraucher (3; 16; 17) über einem vorbestimmten Verbrauchswert belastet wird.

9. Regeleinheit nach einem der vorstehenden Ansprüche, wobei die Regeleinheit (1) einen oder mehrere Inverter umfasst.

10. Regeleinheit nach einem der vorstehenden Ansprüche, wobei die Regeleinheit (1) in einem mit passiven Kühlmitteln versehenen Gehäuse aufgenommen ist.

11. Regeleinheit nach einem der vorstehenden Ansprüche, wobei Bauteile der Regeleinheit (1) in einem Gehäuse eingegossen sind.

## Revendications

1. Unité de régulation (1) pour fournir un signal de sortie ayant une fréquence de sortie régulée et une tension de sortie régulée, dans lequel l'unité de régulation (1) comprend :
une connexion d'entrée pour recevoir un signal d'entrée ayant une fréquence d'entrée et une tension d'entrée, la connexion d'entrée pouvant être connectée à un générateur électrique (10) entraîné par un moteur de véhicule routier (2), le moteur étant agencé pour agir avec une plage de vitesses variables dans une plage opérationnelle comprise entre zéro et une fréquence maximale ; au moins une connexion de sortie pour fournir un signal de sortie ayant une fréquence de sortie et une tension de sortie, la au moins une connexion de sortie pouvant être connectée à au moins un consommateur (3 ; 16 ; 17) qui peut être entraîné uniquement avec une largeur de bande limitée plus petite que la largeur de bande opérationnelle ;
un régulateur de fréquence (12) agencé pour commander la fréquence de sortie, la fréquence de sortie augmentant sensiblement de manière linéaire avec une vitesse croissante du moteur dans une plage allant de 0 à une fréquence nominale, et étant maintenue sensiblement constante au-dessus de la fréquence nominale ; l'unité de régulation (1) comprenant de plus une connexion pour recevoir un signal externe provenant du au moins un consommateur (3 ; 16 ; 17) et l'unité de régulation étant agencée de sorte qu'après avoir reçu le signal externe la fréquence de sortie est régulée en retour vers une fréquence plus faible et ensuite, après une période prédéterminée, la fréquence de sortie peut augmenter à nouveau linéairement.

2. Unité de régulation selon la revendication 1, dans laquelle la période de temps prédéterminée est supérieure à 2 secondes, par exemple 5 secondes.

3. Unité de régulation selon les revendications 1 ou 2, dans laquelle la fréquence nominale est sensiblement égale à 50 Hz.

4. Unité de régulation selon les revendications 1, 2 ou 3, dans laquelle l'unité de régulation comprend de plus un régulateur de tension (11) qui est agencé pour commander la tension de sortie, la tension de sortie augmentant sensiblement de manière linéaire avec une vitesse croissante du pilote d'énergie dans une plage allant de 0 jusqu'à une tension nominale et étant maintenue sensiblement constante au-dessus de la tension nominale.

5. Unité de régulation selon la revendication 4, dans laquelle la tension nominale est sensiblement égale à 400 V en courant alternatif.

6. Unité de régulation selon l'une quelconque des revendications précédentes, dans laquelle le générateur (10) et l'unité de régulation (12) sont agencés pour obtenir une fréquence minimale à une vitesse stationnaire du pilote d'énergie (2).

7. Unité de régulation selon la revendication 6, dans laquelle la fréquence nominale est sensiblement égale à 30 Hz.

8. Unité de régulation selon l'une quelconque des revendications précédentes, dans laquelle l'unité de régulation (1) est en outre agencée pour réguler de manière proportionnelle le retour de fréquence de sortie dans le cas d'une charge de consommateur (3 ; 16 ; 17) au-dessus d'une valeur de consommation prédéterminée.

9. Unité de régulation selon l'une quelconque des revendications précédentes, dans laquelle l'unité de régulation (1) comprend un ou plusieurs onduleurs.

10. Unité de régulation selon l'une quelconque des revendications précédentes, dans laquelle l'unité de régulation (1) est reçue dans un carter muni de moyens de refroidissement passif.

11. Unité de régulation selon l'une quelconque des revendications précédentes, dans laquelle des composants de l'unité de régulation (1) sont coulés dans un carter.
